# EUROPÄISCHE PATENTANMELDUNG

(11) **EP 1 319 848 A1**
(43) Veröffentlichungstag der Anmeldung: **18.06.2003**
(21) Anmeldenummer: 02027476.7
(22) Anmeldetag: 10.12.2002
(51) Int. Cl.: F16B 12/20

(54) **Beschlag**

(30) Priorität: 14.12.2001 DE 20120256 U
(71) Anmelder: HÄFELE GmbH & Co., 72202 Nagold (DE)
(72) Erfinder: Häsler, Georg, 72202 Nagold (DE)
(74) Vertreter: KOHLER SCHMID + PARTNER

(57) **Zusammenfassung**

Um einen Beschlag (1) zur lösbaren Verbindung zweier Platten (12,13) insbesondere Möbelplatten, mit einem aus einer Freigabe- in eine Sperrstellung drehbaren Spannteil (2), welches den Kopf (6) eines zugehörigen Anzugsbolzens (3) aufnimmt, wobei das Spannteil (2) Greifarme (4,5) aufweist, die den Kopf (6) des Anzugsbolzens (3) in der Sperrstellung hintergreifen, derart weiterzubilden, dass unzulässige Zug- und/oder Druckbelastungen am Beschlag (1) beim Verspannen der Beschlagteile vermieden werden, weisen zumindest die in der Sperrstellung am Kopf (6) des Anzugsbolzens (3) angreifenden Oberflächen (7,8) der Greifarme (4,5) eine verformbare Zwischenschicht (9) auf.

## Beschreibung

### Stand der Technik

Die Erfindung betrifft einen Beschlag zur lösbaren Verbindung zweier Platten, insbesondere Möbelplatten, mit einem aus einer Freigabe- in eine Sperrstellung drehbaren Spannteil, welches den Kopf eines zugehörigen Anzugsbolzens aufnimmt, wobei das Spannteil Greifarme aufweist, die den Kopf des Anzugsbolzen in der Sperrstellung hintergreifen. Die eingangs genannten Beschläge sind derart konstruiert, dass beim Verdrehen des Spannteils von der Freigabe- in die Sperrstellung der Anzugsbolzen zum Spannteil gezogen wird. Dies bewirkt, dass die beiden Platten, in denen sich jeweils der Anzugsbolzen oder das Spannteil befindet, aufeinander zu bewegt werden und in Anlage gebracht werden. Da die Platten fest aneinander anliegen sollen, muss das Spannteil in der Sperrstellung einer gewissen Zugbelastung standhalten. Wird nun aus Kostengründen kostengünstigeres und daher oftmals minderwertigeres Material für das Spannteil eingesetzt oder wird am Spannteil Material eingespart, so leidet die Zugfestigkeit des Spannteils darunter. Bei hoher Zugbelastung kann das Spannteil zerstört werden. Dies ist insbesondere dann der Fall, wenn der Anzugsbolzen aufgrund von Fertigungsungenauigkeiten zu weit in das entsprechende Möbelteil eingeführt ist.

### Aufgabe der Erfindung

Aufgabe der vorliegenden Erfindung ist es, den eingangs genannten Beschlag derart weiterzubilden, dass unzulässige Zug- und/oder Druckbelastungen am Beschlag beim Verspannen der Beschlagteile vermieden werden.

### Gegenstand der Erfindung

Gelöst wird diese Aufgabe erfindungsgemäß dadurch, dass zumindest die in der Sperrstellung am Kopf des Anzugsbolzens angreifenden Oberflächen der Greifarme eine verformbare Zwischenschicht aufweisen.

Durch diese Maßnahme wird die vom Kopf des Anzugsbolzens ausgeübte Kraft zunächst in eine Verformung der Zwischenschicht umgeleitet, ehe die Kraft direkt auf das Spannteil wirkt. Dadurch wird das Spannteil entlastet und vor zu großen Zugkräften geschützt und es wird der Zerstörung des Spannteils bei der Montage vorgebeugt, weil der Anzugsbolzen nicht mit zu starker Kraft auf die Greifarme des Spannteils schon vor der Verspannung der Beschlagteile miteinander drücken kann. Bei der Montage wird der Kopf des Anzugsbolzens in das Spannteil in der Freigabestellung eingeführt. Anschließend wird das Spannteil exzentrisch in die Sperrstellung verdreht, wobei der Anzugsbolzen, der in einer ersten Platte befestigt ist, von dem Spannteil, das in einer zweiten Platte gelagert ist, angezogen wird. Steht der Anzugsbolzen nicht weit genug aus der ersten Platte hervor, z.B. weil das Bohrmaß in der ersten Platte zu tief ist, so kommen die erste und zweite Platte in Anlage, ehe das Spannteil vollständig in die Sperrstellung verdreht wurde. Der Anzugsbolzen kann daher nicht noch näher an das Spannteil herangezogen werden. Bei weiterem Verdrehen des Spannteils wird im Stand der Technik eine große Kraft von dem Kopf des Anzugsbolzens auf das Spannteil ausgeübt, die zur Beschädigung des Spannteils führen kann. Erfindungsgemäß wird dagegen die Zwischenschicht verformt, so dass die vom Kopf des Anzugsbolzens ausgeübte Kraft nicht direkt auf das Spannteil wirkt. Die verformbare Zwischenschicht bewirkt weiterhin, dass die Kraft nur allmählich und nicht ruckartig in das Spannteil eingeleitet wird. Allerdings bietet der erfindungsgemäße Beschlag auch Vorteile, wenn der Anzugsbolzen zu weit aus dem ersten Möbelteil hervorsteht. Bei der Montage, d.h. in der Freigabestellung, stößt das freie Ende des Kopfes des Anzugsbolzens gegen die verformbare Zwischenschicht und nicht gegen die Greifarme des Spannteils. Beim Verdrehen des Spannteils wird ebenfalls die Zwischenschicht verformt und eine Beschädigung des Spannteils vermieden. Der erfindungsgemäße Beschlag kann mit geringeren Anforderungen an Fertigungstoleranzen und mit geringerem Materialaufwand gefertigt werden.

Bei einer bevorzugten Ausgestaltung des erfindungsgemäßen Beschlags ist die Zwischenschicht elastisch verformbar. Dadurch behält der Beschlag seine Funktionalität auch bei mehrfachem Zusammenbau der Platten. Der Beschlag kann wieder verwendet werden, da die Zwischenschicht nach dem Lösen des Anzugsbolzens von dem Spannteil nahezu ihre ursprüngliche Form wieder einnimmt.

Bei einer weiteren Ausgestaltung des Beschlags kann vorgesehen sein, dass die Zwischenschicht Aussparungen aufweist, derart, dass auf den Oberflächen der Greifarme Vorsprünge ausgebildet sind. Durch diese Maßnahme werden benachbart zu den Vorsprüngen Freiräume geschaffen, in die hinein das Material der Vorsprünge verdrängt werden kann, wenn der Kopf des Anzugsbolzens die Vorsprünge in der Sperrstellung des Spannteils verformt. Außerdem kann die Zwischenschicht auf diese Art und Weise mit weniger Material und damit kostengünstiger realisiert werden.

Bei einer vorteilhaften Weiterbildung sind die Vorsprünge als Rippen ausgebildet. Solche Rippen erleichtern das Verdrehen des Spannteils, da der Kopf des Anzugsbolzens daran entlang geführt wird.

Sind die Rippen im wesentlichen keilförmig ausgebildet, dann wird die Materialdicke der Rippen entgegen der Verdrehrichtung des Spannteils größer. Dies bedeutet, dass die Rippen eine umso größere Dämpfungswirkung entfalten, je größer die vom Kopf des Anzugsbolzens ausgeübte Kraft wird.

Bei einer alternativen Ausführungsform sind die Vorsprünge als Noppen ausgebildet. Dies führt zu einer besonders kostengünstigen Herstellung der Zwischenschicht.

Besonders vorteilhaft ist es, wenn die Zwischenschicht aus Kunststoff ausgebildet ist. Kunststoff kann in verschiedenen Härten, Viskositäten und Elastizitäten hergestellt werden. Die Zwischenschicht kann durch geeignete Wahl des Kunststoffes besonders gut an den jeweiligen Anwendungsfall angepasst werden. Außerdem kann Kunststoff einfach und kostengünstig verarbeitet werden.

Es kann auch vorgesehen sein, dass die Zwischenschicht mit dem Spannteil einstückig ausgebildet ist. In einem solchen Fall können das Spannteil und die Zwischenschicht in einem einzigen Arbeitsgang hergestellt werden. Insbesondere ist es vorteilhaft, wenn die Zwischenschicht und das Spannteil aus demselben Material hergestellt sind.

Weitere Merkmale und Vorteile der Erfindung ergeben sich aus der nachfolgenden Beschreibung eines Ausführungsbeispiels der Erfindung, anhand den Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ein Ausführungsbeispiel ist in der schematischen Zeichnung dargestellt und wird in der nachfolgenden Beschreibung erläutert. Es zeigt:
- Fig. 1: eine Schnittdarstellung eines Beschlags in der Sperrstellung des Spannteils;
- Fig. 2: eine perspektivische Darstellung des Spannteils des Beschlags der Fig. 1
- Fig. 3: einen Längsschnitt des zwei Platten miteinander verbindenden Beschlags.

### Beschreibung des Ausführungsbeispiels

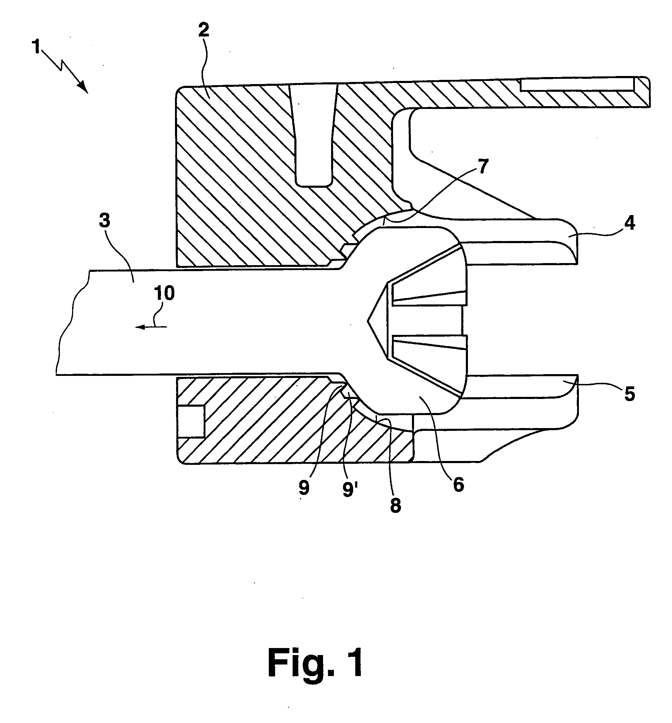

Fig. 1 zeigt eine Schnittdarstellung eines Beschlags 1 mit einem Spannteil 2 und einem Anzugsbolzen 3. Der Beschlag 1 ist in einer Sperrstellung gezeigt. Dabei hintergreifen Greifarme 4, 5 den Kopf 6 des Anzugsbolzens 3. Die dem Kopf 6 des Anzugsbolzens 3 zugewandten Oberflächen 7, 8 der Greifarme 4, 5 weisen eine als Rippen ausgebildete verformbare Zwischenschicht 9 auf. Übt der Kopf 6 des Anzugsbolzens 3 eine Kraft in Pfeilrichtung 10 auf das Spannteil 2 aus, dann verformt sich die als Rippen ausgebildete Zwischenschicht 9. Zwischen den einzelnen Rippen sind Aussparungen 9' vorgesehen, in die das Rippenmaterial ausweichen kann, wenn sich die Zwischenschicht 9 aufgrund der vom Kopf 6 ausgeübten Kraft verformt.

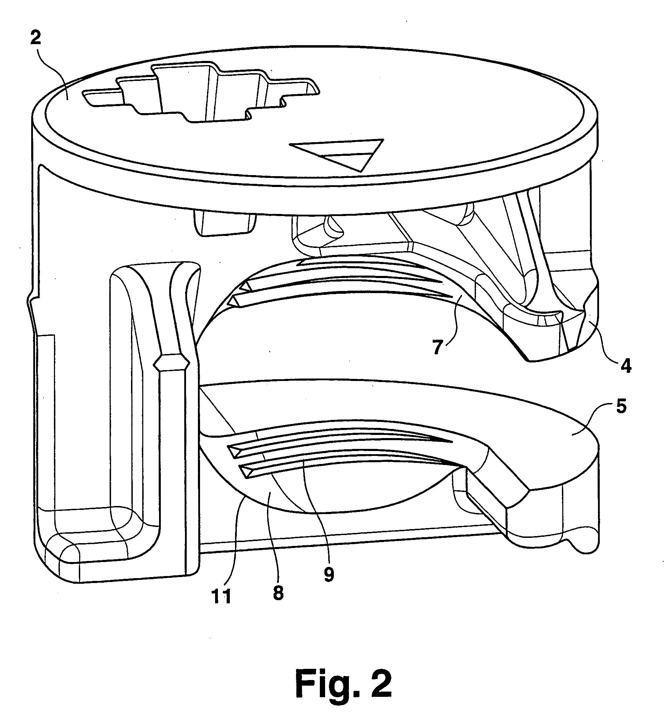

In Fig. 2 ist das Spannteil 2 der Fig. 1 in einer perspektivischen Darstellung gezeigt. In der Freigabestellung des Spannteils 2 wird der Kopf 6 des Anzugsbolzens 3 durch die Öffnung 11 geschoben. Dabei kann das freie Ende des Kopfes 6 des Anzugsbolzens 3 bereits gegen die als keilförmige Rippen ausgebildete Zwischenschicht 9 stoßen und diese verformen. Die keilförmigen Rippen befinden sich auf den als Kugelschalenabschnitte ausgebildeten Oberflächen 7, 8 der Greifarme 4, 5. Beim Verdrehen im Uhrzeigersinn des Spannteils 2 in die Sperrstellung hintergreifen die Greifarme 4, 5 den Kopf 6 des Anzugsbolzens 3. Dadurch gelangen die keilförmigen Rippen in Kontakt mit der Rückseite des Kopfs 6. Die keilförmigen Rippen vergrößern sich im Querschnitt entgegen der Verdrehrichtung. Die keilförmigen Rippen gleichen den Abstand zwischen dem Kopf 6 und den Oberflächen 7, 8 der Greifarme aus. Außerdem verformen sie sich, wenn der Anzugsbolzen 3 beim Verdrehen des Spannteils 2 angezogen wird.

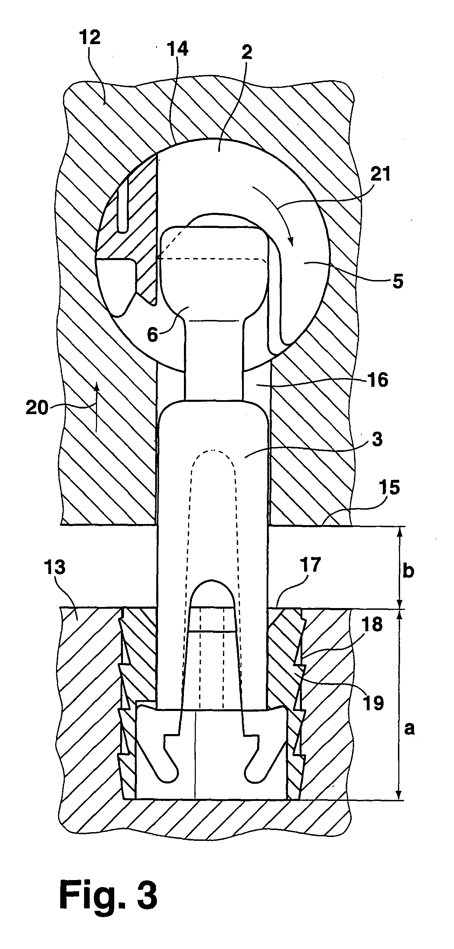

Fig. 3 zeigt im Längsschnitt den Beschlag 1, der aus dem zylindrischen Spannteil 2 und dem zu diesem gehörenden Anzugsbolzen 3 besteht. Er dient der Verbindung von zwei aus Holz oder Kunststoff bestehenden Möbelplatten 12, 13. Zur Aufnahme des zylindrischen Spannteils 2 in der ersten Möbelplatte 12 ist in dieser eine zylindrische Ausnehmung 14 eingearbeitet, die in eine von der Stirnseite 15 dieser Möbelplatte 12 eingebrachte Bohrung 16 übergeht. In der zweiten Möbelplatte 13 ist von deren Stirnseite 17 ebenfalls eine mit 18 bezeichnete Bohrung eingearbeitet. In der Bohrung 18 ist eine Hülse 19 vorgesehen, in die der Anzugsbolzen 3 eingeführt und in an sich bekannter Art und Weise verankert wird. Soll der Beschlag 1 montiert werden, so wird der Anzugsbolzen 3 zusammen mit seinem Kopf 6 in Richtung des Pfeils 20 in die in der ersten Möbelplatte 12 befindliche Bohrung 16 eingeführt, bis der Anzugsbolzenkopf 6 mit den Greifarmen 4, 5 des Spannteils 2 in Eingriff kommt. Wird sodann das Spannteil 2 in Pfeilrichtung 21 verdreht, so wird der Anzugsbolzen 3 um das Maß b soweit in die Bohrung 16 hinein gezogen, bis die beiden Möbelplatten 12, 13 mit ihren Stirnseiten 15, 17 fest und unter Spannung aneinander liegen. Wird das Bohrmaß a der Bohrung 18 überschritten und sitzt der Anzugsbolzen 3 demzufolge etwas tiefer in der Bohrung 18, so erhöht sich die Spannung zwischen den Möbelplatten 12, 13, wenn das Spannteil 2 sich in der Sperrstellung befindet. Diese Spannung wird durch die verformbare Zwischenschicht 9, die in den Figuren 1 und 2 dargestellt ist, aufgenommen.

## Patentansprüche

1. Beschlag (1) zur lösbaren Verbindung zweier Platten (12, 13), insbesondere Möbelplatten, mit einem aus einer Freigabe- in eine Sperrstellung drehbaren Spannteil (2), welches den Kopf (6) eines zugehörigen Anzugsbolzens (3) aufnimmt, wobei das Spannteil (2) Greifarme (4, 5) aufweist, die den Kopf (6) des Anzugsbolzens (3) in der Sperrstellung hintergreifen, **dadurch gekennzeichnet, dass** zumindest die in der Sperrstellung am Kopf (6) des Anzugsbolzens (3) angreifenden Oberflächen (7, 8) der Greifarme (4, 5) eine verformbare Zwischenschicht (9) aufweisen.

2. Beschlag nach Anspruch 1, **dadurch gekennzeichnet, dass** die Zwischenschicht (9) elastisch verformbar ist.

3. Beschlag nach Anspruch 1 oder 2, **dadurch gekennzeichnet, dass** die Zwischenschicht (9) Aussparungen (9') aufweist, derart, dass auf den Oberflächen (7, 8) der Greifarme (4, 5) Vorsprünge ausgebildet sind.

4. Beschlag nach Anspruch 3, **dadurch gekennzeichnet, dass** die Vorsprünge als Rippen ausgebildet sind.

5. Beschlag nach Anspruch 4, **dadurch gekennzeichnet, dass** die Rippen im wesentlichen keilförmig ausgebildet sind.

6. Beschlag nach Anspruch 3, **dadurch gekennzeichnet, dass** die Vorsprünge als Noppen ausgebildet sind.

7. Beschlag nach einem der vorhergehenden Ansprüche, **dadurch gekennzeichnet, dass** die Zwischenschicht (9) aus Kunststoff ausgebildet ist.

8. Beschlag nach einem der Ansprüche 1 bis 6, **dadurch gekennzeichnet, dass** die Zwischenschicht (9) mit dem Spannteil (2) einstückig ausgebildet ist.
